(19) Europäisches Patentamt European Patent Office Office européen des brevets

(11) **EP 3 368 936 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **16797723.0**

(22) Anmeldetag: **25.10.2016**

(51) Int Cl.:
**G02B 21/36** *(2006.01)*    **G02B 23/16** *(2006.01)*
**G02B 23/24** *(2006.01)*    **G03B 17/48** *(2006.01)*

(86) Internationale Anmeldenummer:
**PCT/DE2016/100499**

(87) Internationale Veröffentlichungsnummer:
**WO 2017/071686 (04.05.2017 Gazette 2017/18)**

(54) **FOTO-ADAPTER**

PHOTO ADAPTER

ADAPTATEUR PHOTOGRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2015 DE 102015118250**

(43) Veröffentlichungstag der Anmeldung:
**05.09.2018 Patentblatt 2018/36**

(73) Patentinhaber: **Leica Camera AG**
**35578 Wetzlar (DE)**

(72) Erfinder: **KAMMANS, Sigrun**
**35745 Herborn (DE)**

(74) Vertreter: **Stamer, Jan**
**PATENTANWALTSKANZLEI STAMER**
**Postfach 2604**
**35536 Wetzlar (DE)**

(56) Entgegenhaltungen:
**EP-A2- 2 674 811    US-A- 6 069 651**

**Beschreibung**

Die Erfindung betrifft einen Foto-Adapter zum Aufsetzen auf das Okular eines optischen Vergrößerungsgerätes mit Dioptrie-Ausgleichs-Vorrichtung.

Hinter die Okulare von Spektiven, Teleskopen, Mikroskopen oder Messgeräten werden anstelle des menschlichen Auges zunehmend Kameras mit auswechselbaren Objektiven geschaltet.

Aus der Druckschrift EP 2 674 811 A2 ist ein Objektiv für ein Bildaufzeichnungsgerät bekannt, das ein Gehäuse zum Aufsetzen auf das Okular eines fernoptischen Gerätes und einen Anschluss an das Bildaufzeichnungsgerät enthält. In dem Gehäuse ist mindestens eine Linse zur Abbildung eines vom fernoptischen Gerät erzeugten Bildes auf das Bildaufzeichnungsgerät angeordnet.

Aus der Druckschrift US 6 069 651 A ist ein Abbildungssystem für Endoskope bekannt. Auf das Okular eines Endoskops ist ein TV-Kamera-Kopf mit Abbildungsoptik und Bildsensor aufsetzbar. Zwischen das Endoskop-Okular und den Kamera-Kopf kann ein längs der optischen Achse verschiebbarer Zwischenadapter zum Fokussieren eingesetzt werden.

Die Objektive der Kameras sind optimiert für parallel einfallenden Strahlengang, d.h. für 0 Dioptrien. Meistens lassen sie sich in den Nahbereich hinein fokussieren und bieten oft auch dann noch eine akzeptable Abbildungsleistung. Das bedeutet, dass ein kurzsichtiger Beobachter seinen Augenfehler mit dem Objektiv der Kamera ausgleichen kann und dann ohne oder mit geringem Nachfokussieren zwischen Beobachtung und Bildaufnahme wechseln kann.

Da ein Kamera-Objektiv aber keinen oder nur bei langen Brennweiten einen sehr geringen Überhub über Unendlich hinaus bietet, muss ein weitsichtiger Beobachter sein Beobachtungsgerät immer erst auf 0 Dioptrien stellen, um mit der Kamera Bildaufnahmen machen zu können.

Der Erfindung lag daher die Aufgabe zugrunde, einen Foto-Adapter zu schaffen, der in einfacher Weise den Übergang zwischen Beobachtung und Bildaufnahme unabhängig von der Brennweite des Kamera-Objektivs ermöglicht.

Diese Aufgabe wird bei einem Foto-Adapter der eingangs genannten Art erfindungsgemäß durch die kennzeichnenden Merkmale der Ansprüche 1 oder 2 gelöst. Vorteilhafte Ausgestaltungen ergeben sich aus den Merkmalen der Unteransprüche.

Mit dem erfindungsgemäßen Foto-Adapter ist es möglich, die unter Berücksichtigung der individuellen Fehlsichtigkeit am Beobachtungsgerät eingestellte Scharfeinstellung beizubehalten und durch ein die Schnittweite des Okulars des Beobachtungsgerätes veränderndes Objektiv fester Brennweite, kombiniert mit einer Schiebehülse oder einer auswechselbaren Ausgleichslinse die Dioptrie-Einstellung zu kompensieren.

Der Ausgleich der Fehlsichtigkeit kann am Beobachtungsgerät sowohl durch Fokussierung am Objektiv als auch durch Einstellung am Okular erfolgen. Das Ausmaß der individuellen Fehlsichtigkeit in Dioptrie-Werten ist dem Beobachter entweder durch die von einem Augenoptiker festgestellten Dioptrie-Werte seiner Brillengläser bekannt und kann in dem Foto-Adapter durch entsprechende Veränderung der Auszugslänge der Schiebehülse oder durch Einfügen einer Ausgleichslinse mit im Vorzeichen inverser Brennweite kompensiert werden.

Zur Anpassung des Foto-Adapters an sich verändernde individuelle Fehlsichtigkeiten ist auch eine Kombination der beiden Lösungen möglich, indem die gegenüber einer vorhandenen Fehlsichtigkeit durch eine feste Ausgleichslinse kompensierte Dioptrie-Einstellung zusätzlich durch eine Verstellung der Schiebehülse ausgeglichen wird.

Wenn der Dioptrie-Wert nicht bekannt ist, kann er z.B. mit einem Dioptrie-Fernrohr gemessen oder bei einer Kamera mit Display in Abhängigkeit von der Veränderung der Auszugslänge der Schiebehülse und deren Fixierung bei Scharfeinstellung ermittelt werden. In jedem Fall kann der notwendige Dioptrie-Ausgleich über die Skala am Foto-Adapter reproduzierbar eingestellt und fixiert werden.

Durch Verbindung des Foto-Adapters mit einem Klemmring zum Aufsetzen auf das Okular des Beobachtungsgerätes ist ein einfacher Wechsel zwischen Beobachtung und Bildaufnahme ohne weitere Fokussierung möglich.

Die Brennweite f des in den Foto-Adapter eingesetzten Objektivs ist fest und wird in Abhängigkeit von der Größe der Sensor-Diagonalen in der Kamera, der Größe des objektiven Sehwinkels $\alpha$ des Beobachtungsgerätes und des Vergrößerungsfaktors $\Gamma$ ermittelt. Bei einem veränderbaren Vergrößerungsfaktor (Zoom) wird angestrebt, den Bildaufnahmesensor mit dem objektiven Sehfeld zumindest für eine Vergrößerung auszuleuchten.

Der objektive Sehwinkel $\alpha$ ist der Winkel zwischen der optischen Achse des Beobachtungsgerätes und dem Rand des beobachteten Sehfeldes, so dass der Durchmesser des Sehfeldes durch $2\alpha$ bestimmt ist. Die Brennweite f des Objektivs in dem Foto-Adapter ergibt sich dann aus

$$f = \frac{\text{Sensordiagonale}}{\text{Vergrößerungsfaktor } \Gamma * \tan \alpha}$$

Bei fernoptischen Beobachtungsgeräten ergibt sich ein typischer Wert f = 30 mm $\pm$ 30 %.

Die Verschiebelänge $\Delta$ bei Einstellung der Schiebehülse auf den notwendigen Dioptrie-Wert ergibt sich aus

$$\Delta = \frac{Dioptriewert}{1.000} * f^2$$

Der maximale Verschiebeweg $\Delta$ beträgt ungefähr 10 mm $\pm$ 30 %.

In der Zeichnung ist ein Ausführungsbeispiel des erfindungsgemäßen Foto-Adapters schematisch dargestellt und wird nachfolgend anhand der Figuren näher beschrieben. Dabei zeigen:

Fig. 1a - 1c    den Dioptrie-Ausgleich an einem Teleskop bei normalsichtigen, kurzsichtigen und weitsichtigen Beobachtern,

Fig. 2a - 2c    den an ein Okular eines Teleskops angesetzten Foto-Adapter in entsprechend unterschiedlichen Auszugsweiten der Schiebehülse,

Fig. 3a - 3c    die Einfügung einer zusätzlichen Ausgleichslinse vor dem Objektiv und

Fig. 4    einen Querschnitt durch einen Foto-Adapter mit Schiebehülse für ein Teleskop.

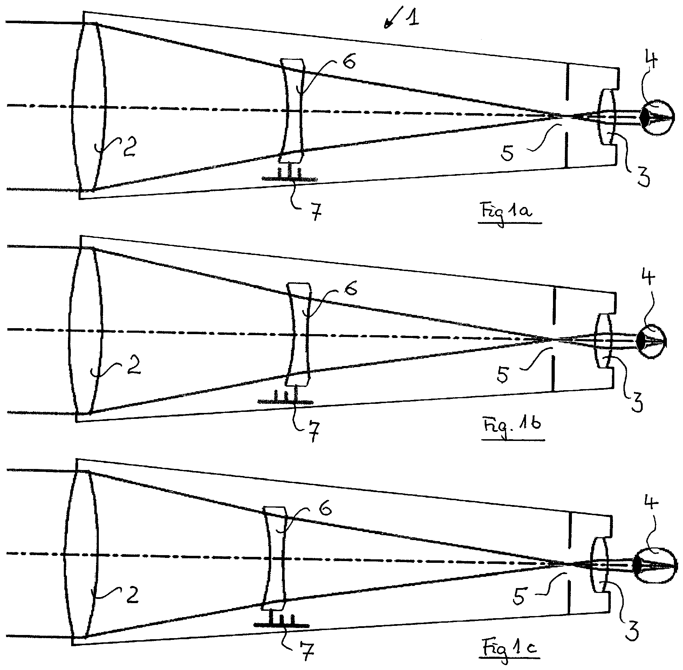

Fig. 1a zeigt schematisch ein Teleskop 1 mit Teleskop-Objektiv 2 und Teleskop-Okular 3. Mit dem normalsichtigen Auge 4 wird okularseitig das in einer Zwischenbildebene 5 erzeugt Bild des Teleskops betrachtet. Die aus dem Teleskop-Okular 3 austretenden Strahlen für einen Bildpunkt verlaufen parallel zueinander. Eine verstellbare Negativ-Linse 6 symbolisiert die gegenüber einer Skala 7 zum Dioptrie-Ausgleich bei einer Fehlsichtigkeit des Auges 4 erforderliche Verstellmöglichkeit des Abbildungssystems des Teleskops 1.

Fig. 1b zeigt den Strahlenverlauf bei einem kurzsichtigen Auge 4. Zur Scharfstellung auf der Netzhaut des Auges 4 muss das aus dem Teleskop-Okular 3 austretende Strahlenbündel leicht konvergent sein. Dies wird durch Verstellung der Negativ-Linse 6 an der Skala 7 in eine zum Teleskop-Okular 3 hin verschobene Stellung und Verlagerung der Zwischenbildebene 5 zum Teleskop-Objektiv 2 hin erzeugt.

Fig. 1c zeigt den Strahlenverlauf bei einem weitsichtigen Auge 4. Das aus dem Teleskop-Okular 3 austretende Strahlenbündel muss leicht divergent verlaufen. Dies wird durch eine Verstellung der Negativ-Linse 6 an der Skala 7 in eine zum Teleskop-Objektiv 2 hin verschobene Stellung und Verlagerung der Zwischenbildebene 5 zum Okular 3 hin erzeugt.

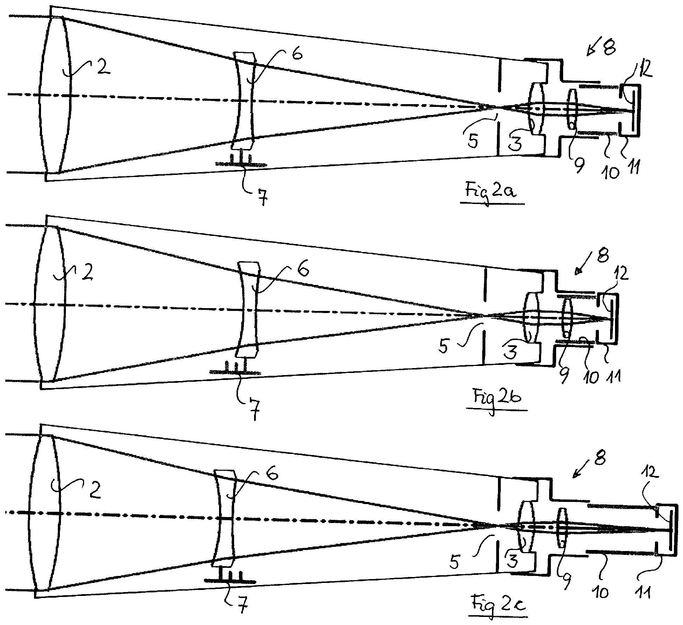

Fig. 2a zeigt anstelle des Auges 4 einen auf das Okular 3 des Teleskops 1 aufgesetzten Foto-Adapter 8 mit Adapter-Objektiv 9, Schiebehülse 10, Kamera-Gehäuse 11 und Kamera-Sensor 12. In der Neutral-Stellung der Negativ-Linse 6 befindet sich die Schiebehülse 10 in einer mittleren Auszugsweite und neuer Schnittweite des Teleskop-Okulars 3.

Fig. 2b zeigt die einem kurzsichtigen Auge 4 entsprechende tiefe Einschubstellung der Schiebehülse 10 mit verkürzter Schnittweite des Teleskop-Okulars 3.

Fig. 2c zeigt die einem weitsichtigen Auge 4 entsprechende weit herausgezogene Stellung der Schiebehülse 10 mit verlängerter Schnittweite des Teleskop-Okulars 3.

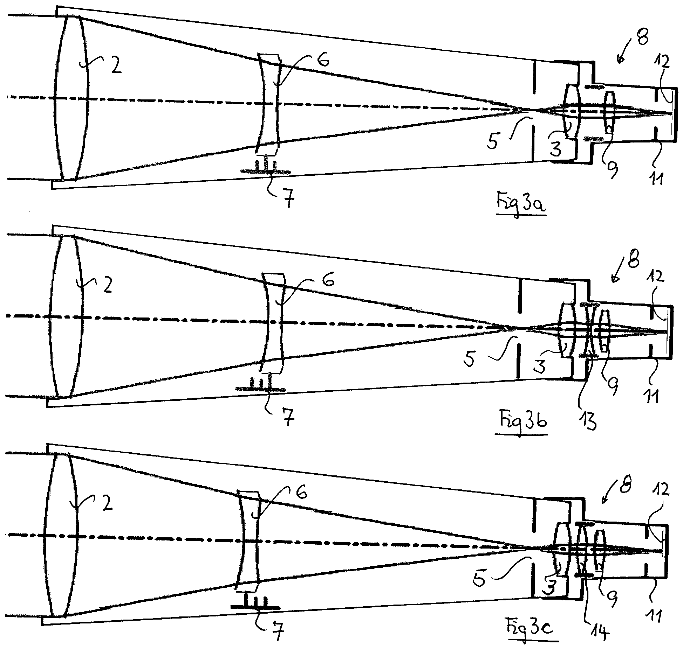

Fig. 3a-3b zeigen einen Foto-Adapter 8 ohne Schiebehülse 10, anstelle dieser aber mit einer Ausgleichslinse zwischen Teleskop-Okular 3 und Adapter-Objektiv 9. Entsprechend dem Dioptrie-Ausgleich bei einem kurzsichtigen Auge 4 ist in Fig. 3b eine Ausgleichslinse negativer Brechkraft 13 und in Fig. 3c entsprechend dem Dioptrie-Ausgleich bei einem weitsichtigen Auge 4 eine Ausgleichslinse positiver Brechkraft 14 vorgesehen.

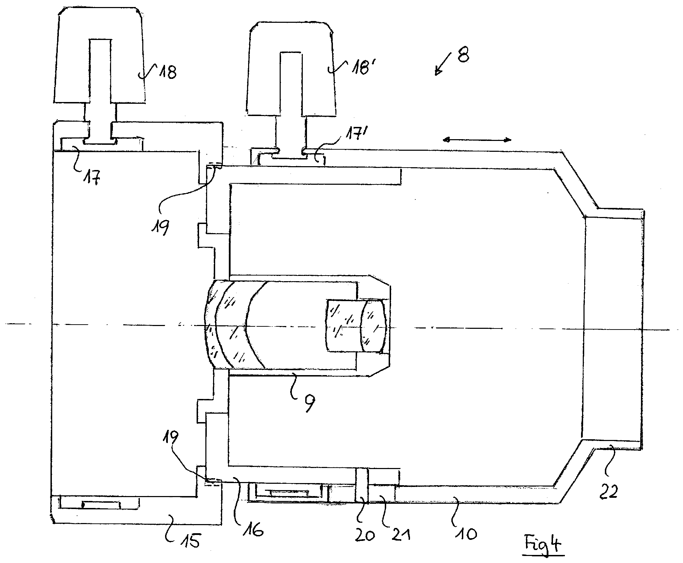

Fig. 4 zeigt im Querschnitt einen Foto-Adapter 8 mit Zylinderring 15 zum Aufsetzen auf das Okular 3 eines Teleskops 1, Adapter-Gehäuse 16 mit Adapter-Objektiv 9 und Schiebehülse 10. Der Zylinderring 15 enthält einen Klemmring 17 mit Klemmschraube 18, mit denen der Zylinderring 15 auf dem Gehäuse eines Teleskop-Okulars 3 fixiert werden kann.

Der Zylinderring 15 ist mit dem Adapter-Gehäuse 16 über ein Schraubgewinde 19 oder anderweitig mit diesem verbunden. In den Adapter 8 ist ein Adapter-Objektiv 9 feststehend eingesetzt. Auf dem Adapter-Gehäuse 16 ist eine Schiebehülse 10 längsverschieblich gelagert und kann über einen Klemmring 17' mit Klemmschraube 18' in einer beliebigen Auszugsstellung fixiert werden. Die Klemmschrauben 18, 18' können vorzugsweise um 90° verdreht zueinander angeordnet sein.

Die Schiebehülse 10 ist an ihrem freien Ende mit einem Anschluss 22 für ein Kamera-Gehäuse 11 versehen. Der Anschluss kann aus einem Schraubgewinde oder einem Bajonett bestehen.

Mit dem Adapter 10 ist ein Stift 20 verbunden, der in einem Schlitz 21 in der Schiebehülse 10 gleitet. An dem Schlitz 21 ist eine nicht weiter dargestellte Skala zur Anzeige der Stellung des Stiftes 20 und damit der Auszugsstellung der Schiebehülse 10 angebracht.

Anstelle der linearen Längsverschiebung der Schiebehülse 10 ist auch eine Schraubverstellung oder eine Kurvenführung möglich, wobei anstelle der Stift-/Schlitz-Anzeige 20, 21 eine entsprechende Markierung zwischen Schiebehülse 10 und Adapter 16 ähnlich der Entfernungseinstellung bei Foto-Objektiven vorzusehen ist.

**Bezugszeichenliste**

| | |
|---|---|
| 1 | Teleskop |
| 2 | Teleskop-Objektiv |
| 3 | Teleskop-Okular |
| 4 | Auge |
| 5 | Zwischenbildebene |
| 6 | Negativ-Linse |
| 7 | Skala |
| 8 | Foto-Adapter |
| 9 | Adapter-Objektiv |
| 10 | Schiebehülse |
| 11 | Kamera-Gehäuse |
| 12 | Bildaufnahme-Sensor |
| 13 | Ausgleichslinse negativer Brechkraft |
| 14 | Ausgleichslinse positiver Brechkraft |
| 15 | Zylinderring |
| 16 | Adapter-Gehäuse |
| 17,17' | Klemmring |
| 18,18' | Klemmschraube |
| 19 | Schraubgewinde |
| 20 | Stift |
| 21 | Schlitz |
| 22 | Anschluss für Kamera-Gehäuse |

**Patentansprüche**

1. Foto-Adapter zum Aufsetzen auf das Okular eines optischen Vergrößerungsgerätes mit Dioptrie-Ausgleichs-Vorrichtung, ausgestattet mit einer Vorrichtung zur Kompensation des Dioptrie-Ausgleichs durch

   a) ein in den Foto-Adapter (8) ortsfest eingesetztes, die Schnittweite des Okulars (3) veränderndes Adapter-Objektiv (9) fester Brennweite f und

   b) eine zum Ausgleich der Schnittweiten-Änderung verschiebbare Hülse (10) mit Anschluss für ein Kamera-Gehäuse (11) mit Bildaufnahme-Sensor (12), wobei

   c) an einem Adapter-Gehäuse (16) eine die Verschiebelänge Δ in Dioptrie-Einheiten Dpt. anzeigende Skala angebracht ist.

2. Foto-Adapter zum Aufsetzen auf das Okular eines optischen Vergrößerungsgerätes mit Dioptrie-Ausgleichs-Vorrichtung, ausgestattet mit einer Vorrichtung zur Kompensation des Dioptrie-Ausgleichs durch

   a) ein in den Foto-Adapter (8) ortsfest eingesetztes, die Schnittweite des Okulars (3) veränderndes Adapter-Objektiv (9) fester Brennweite f, wobei

   b) der Adapter (8) in Lichtrichtung vor dem Adapter-Objektiv (9) ein Einschubfach für eine Ausgleichslinse (13, 14) enthält, und

   c) die Brennweite der Ausgleichslinse (13, 14) gleich dem im Vorzeichen entgegensetzten Wert der zum Dioptrie-Ausgleich notwendigen Brennweiten-Änderung des Vergrößerungsgerätes ist.

3. Foto-Adapter nach Anspruch 1 oder 2, **dadurch gekennzeichnet, dass** die Brennweite f des Adapter-Objektivs (9) in Abhängigkeit von der Größe der Diagonalen des Bildaufnahmesensors (12), des Sehfelddurchmessers $2\alpha$ und des Vergrößerungsfaktors $\Gamma$ des Vergrößerungsgerätes bestimmt ist durch

$$f = \text{Sensordiagonale} / (\text{Vergrößerungsfaktor} \times \tan \alpha).$$

**4.** Foto-Adapter nach Anspruch 3, **dadurch gekennzeichnet, dass** die Brennweite f = 30 mm $\pm$ 30% beträgt.

**5.** Foto-Adapter nach Anspruch 1, **dadurch gekennzeichnet, dass** die Verschiebelänge $\Delta$ bestimmt ist durch

$$\Delta = \frac{Dioptriewert}{1.000} * f^2.$$

**Claims**

**1.** Photo adapter for attaching to the eyepiece of an optical magnification device having a diopter compensation apparatus, equipped with an apparatus for compensating the diopter compensation by

a) an adapter objective lens (9) with a fixed focal length f that modifies the back focal length of the eyepiece (3) and that has been inserted into the photo adapter (8) in an immovable manner and
b) a displaceable sleeve (10) with connector for a camera housing (11) with image-recording sensor (12), for compensating the back focal length change, wherein
c) a scale displaying the displacement length $\Delta$ in diopter units dpt is attached to an adapter housing (16).

**2.** Photo adapter for attaching to the eyepiece of an optical magnification device having a diopter compensation apparatus, equipped with an apparatus for compensating the diopter compensation by

a) an adapter objective lens (9) with a fixed focal length f that modifies the back focal length of the eyepiece (3) and that has been inserted into the photo adapter (8) in an immovable manner, wherein
b) the adapter (8) contains a slide-in compartment for a compensation lens (13, 14) upstream of the adapter objective lens (9) in the light direction and
c) the focal length of the compensation lens (13, 14) equals the value with opposite sign of the focal length change of the magnification device that is required for the diopter compensation.

**3.** Photo adapter according to Claim 1 or 2, **characterized in that** the focal length f of the adapter objective lens (9) is determined depending on the size of the diagonal of the image-recording sensor (12), the visual field diameter $2\alpha$ and the magnification factor $\Gamma$ of the magnification device according to

```
f = sensor diagonal/(magnification factor × tan α).
```

**4.** Photo adapter according to Claim 3, **characterized in that** the focal length is

```
f = 30 mm ± 30%.
```

**5.** Photo adapter according to Claim 1, **characterized in that** the displacement length $\Delta$ is determined by

$$\Delta = \frac{diopter\ value}{1000} * f^2.$$

**Revendications**

**1.** Adaptateur de photographie destiné à être monté sur l'oculaire d'un appareil de grossissement optique avec dispositif de correction dioptrique, équipé d'un dispositif de compensation de la correction dioptrique par

a) un objectif adaptateur (9) à distance focale f fixe installé en position fixe dans l'adaptateur de photographie (8) et qui modifie le tirage optique de l'oculaire (3) et
b) une douille (10) coulissante pour corriger la modification du tirage optique, comprenant un raccord pour un boîtier de caméra (11) muni d'un capteur d'enregistrement d'image (12),

c) une graduation qui affiche la longueur de décalage Δ en unités de dioptrie Dpt. est montée sur un boîtier adaptateur (16).

2. Adaptateur de photographie destiné à être monté sur l'oculaire d'un appareil de grossissement optique avec dispositif de correction dioptrique, équipé d'un dispositif de compensation de la correction dioptrique par

a) un objectif adaptateur (9) à distance focale f fixe installé en position fixe dans l'adaptateur de photographie (8) et qui modifie le tirage optique de l'oculaire (3),
b) l'adaptateur (8) contenant un compartiment enfichable pour une lentille correctrice (13, 14) devant l'objectif adaptateur (9) dans le sens de la lumière et
c) la distance focale de la lentille correctrice (13, 14) étant égale à la valeur de signe opposé de la modification de la distance focale de l'appareil de grossissement nécessaire pour la correction dioptrique.

3. Adaptateur de photographie selon la revendication 1 ou 2, **caractérisé en ce que** la distance focale f de l'objectif adaptateur (9) est déterminée en fonction de la taille de la diagonale du capteur d'enregistrement d'image (12), du diamètre du champ de vision 2α et du facteur de grossissement Γ de l'appareil de grossissement par

```
f = diagonale du capteur / (facteur de grossissement x
tan α).
```

4. Adaptateur de photographie selon la revendication 3, **caractérisé en ce que** la distance focale f = 30 mm ± 30 %.

5. Adaptateur de photographie selon la revendication 1, **caractérisé en ce que** la longueur de décalage Δ est déterminée par

$$\Delta = \frac{valeur\ dioptrique}{1\,000}\ x\ f^2.$$

Fig 1a

Fig. 1b

Fig 1c

Fig 2a

Fig 2b

Fig 2c

Fig 3a

Fig 3b

Fig 3c

Fig 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2674811 A2

- US 6069651 A